# EUROPEAN PATENT APPLICATION

(11) **EP 3 073 554 A1**
(43) Date of publication of application: **28.09.2016**
(21) Application number: 14864607.8
(22) Date of filing: 19.11.2014
(51) Int. Cl.: H01M 4/02, H01M 4/133, H01M 12/06

(54) **POSITIVE ELECTRODE FOR LITHIUM AIR BATTERY AND LITHIUM AIR BATTERY COMPRISING SAME**

(30) Priority: 19.11.2013 KR 20130140806
(71) Applicant: IUCF-HYU (Industry-University Cooperation Foundation Hanyang University), Seoul 133-791 (KR)
(72) Inventor: SUN, Yang-Kook, Seoul 135-280 (KR); PARK, Jin Bum, Seoul 133-110 (KR)
(74) Representative: Gulde & Partner
(86) International application number: PCT/KR2014/011147
(87) International publication number: WO 2015/076568

(57) **Abstract**

The present invention relates to a positive electrode for a lithium air battery and a lithium air battery comprising the same and, more specifically, to a positive electrode for a lithium air battery, the positive electrode containing mesoporous carbon as an oxygen redox catalyst; and to a lithium air battery comprising the same. The positive electrode for a lithium air battery according to the present invention can improve energy efficiency and capacitance by implementing high charging and discharging capacitance using mesoporous carbon as an oxygen redox catalyst.

## Description

### [Technical Field]

The present invention relates to a positive electrode for a lithium-air battery and a lithium-air battery including the same, and, more specifically, to a positive electrode for a lithium-air battery containing mesoporous carbon as an oxygen reduction/oxidation (redox) catalyst and to a lithium-air battery including the same.

### [Background Art]

Currently, lithium secondary batteries are getting much attention as a next-generation battery, but electric-powered cars equipped with a lithium secondary battery are disadvantageous in that the running distance for a single charge is too short to compete with engine-operated cars.

To solve the aforementioned problem of lithium batteries, lithium-air batteries have been actively researched recently. Lithium air batteries have a theoretical energy density of 3000 Wh/kg or more, which corresponds to about 10 times the energy density of lithium ion batteries. Also, lithium air batteries are environmentally friendly and can provide enhanced safety compared to lithium ion batteries.

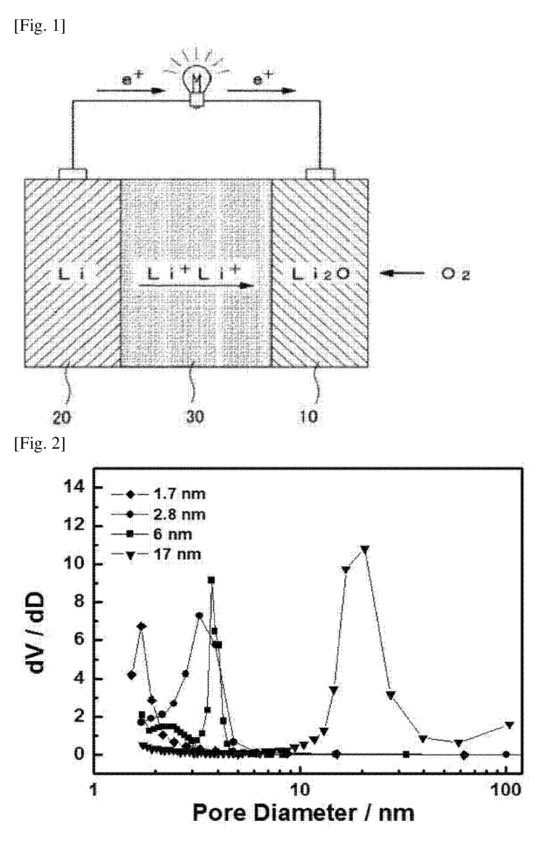

FIG. 1 shows a basic structure of such a lithium-air battery. As shown in FIG. 1, the lithium-air battery includes a carbon-based, gas-diffusion-type oxygen electrode as a positive electrode 10, lithium metal or a lithium compound as a negative electrode 20, and an organic electrolyte 30 disposed between the positive electrode 10 and the negative electrode 20. While the lithium-air battery is being discharged, the metal ions released from the negative electrode react with the air (oxygen) from the positive electrode side to generate a metal oxide. While the lithium-air battery is being charged, the generated metal oxide is reduced into a metal ion and air.

Generally, in lithium air batteries, air is used as a positive electrode active material, and Li metal, which has an electric potential difference with air, an alloy thereof, or Li intercalated into carbon or the like is used as a negative electrode. In addition, there is also a case of using a metal forming a divalent ion, such as Zn, Mg, or Ca, a metal forming a trivalent ion, such as Al, or an alloy thereof as the negative electrode.

The positive electrode of lithium-air batteries, i.e. air electrode, contains carbon, such as carbon black, carbon nanotubes, and graphite, as the main ingredient, which serves as a venue in which a catalyst, oxygen, and lithium ions contact each other and react. However, lithium-air batteries using the electrode have a problem of poor charge/discharge energy efficiency.

### [Disclosure]

### [Technical Problem]

To solve the aforementioned problems of the conventional art, the present invention is directed to providing a positive electrode for a lithium-air battery, wherein the positive electrode contains a catalyst, having a novel structure, for the positive electrode for a lithium-air battery, and is capable of improving the charge/discharge energy efficiency.

### [Technical Solution]

To solve the aforementioned problem, the present invention provides a positive electrode for a lithium-air battery using oxygen as the positive electrode active material and mesoporous carbon as a reduction/oxidation (redox) catalyst of the oxygen.

In the positive electrode for a lithium-air battery of the present invention, the mesoporous carbon has an average pore size of 1 to 5 nm, as measured by a Brunauer-Emmett-Teller (BET) method.

Mesopores essentially refer to pores with a size of 1 to 50 nm. In the positive electrode for a lithium-air battery of the present invention, it is preferable that the mesopore size is adjusted within the range of 1 to 20 nm. More preferably, the size is adjusted within the range of 1 to 5 nm. The mesoporous carbon containing pores with the size of 1 to 5 nm is more effective compared to conventional activated carbon in the form of a powder or granules and to mesoporous carbon with the pore size of 5 nm or more.

In the positive electrode for a lithium-air battery of the present invention, the carbon is, for example, carbon black, graphite, graphene, an activated carbon, and a carbon fiber. Specifically, mesoporous carbon may be in the form of a mesopore-containing carbon nanoparticle, a carbon nanotube, a carbon nanofiber, carbon nanosheet, a carbon nanobar, or the like.

In the positive electrode for a lithium-air battery of the present invention, the mesoporous carbon has an average diameter of 100 nm to 100 µm. In the positive electrode for a lithium-air battery of the present invention, the specific surface area, as measured by a BET method, of the mesoporous carbon may be 10 m²/g or more, specifically, 50 m²/g or more, and more specifically, 100 m²/g or more. In the positive electrode for a lithium-air battery of the present invention, when the average diameter and the specific surface area of the mesoporous carbon is within the aforementioned ranges, the contact area with oxygen increases and the charge/discharge capacitance of the lithium-air battery is improved, and thus, a high-capacitance lithium-air battery can be fabricated.

The positive electrode for a lithium-air battery of the present invention uses oxygen as the positive electrode active material and further includes one or more oxygen redox catalysts selected from the group consisting of a metal particle, a metal oxide particle, and an organometallic compound.

In the positive electrode for a lithium-air battery of the present invention, the metal particle is one or more selected from the group consisting of Co, Ni, Fe, Au, Ag, Pt, Ru, Rh, Os, Ir, Pd, Cu, Mn, Ti, V, W, Mo, Nb, and alloys thereof.

In the positive electrode for a lithium-air battery of the present invention, the metal oxide particle is one or more selected from the group consisting of manganese oxides, cobalt oxides, iron oxides, zinc oxides, nickel oxides, vanadium oxides, molybdenum oxides, niobium oxides, titanium oxides, tungsten oxides, chromium oxides, and complex oxides thereof.

The organometallic compounds may be an aromatic heterocyclic compound coordinated to a transition metal, but are not limited thereto, and may be any oxygen redox catalyst that may be used in the art.

In the positive electrode for a lithium-air battery of the present invention, one or more oxygen redox catalysts selected from the group consisting of the metal particles, metal oxide particles, and organometallic compounds are included at 0.1 to 80 % by weight of the total weight of the positive electrode.

In the positive electrode for a lithium-air battery of the present invention, the positive electrode further contains a binder. Examples of the binder include a polyvinylidene fluoride (PVDF) and a polytetrafluoroethylene (PTFE).

In the positive electrode for a lithium-air battery of the present invention, the positive electrode further contains a carbon-based material.

In the positive electrode for a lithium-air battery of the present invention, the positive electrode contains a catalyst at 0.1 to 77.1 % by weight, a carbon-based material at 0 to 97 % by weight, and a binder at 2.9 to 20 % by weight of the total weight of the positive electrode.

In addition, the present invention provides a lithium-air battery including the positive electrode of the present invention; a negative electrode capable of occluding and releasing lithium ions; and a non-aqueous electrolyte.

The negative electrode capable of occluding and releasing lithium ions may be a lithium metal, a lithium metal-based alloy, a lithium intercalation compound, or the like. Examples of the lithium metal-based alloy may include alloys of lithium with aluminum, tin, magnesium, indium, calcium, titanium, and vanadium. The lithium intercalation compound may be a carbon-based material such as graphite. For example, the negative electrode capable of occluding and releasing lithium ions may be a lithium metal and a carbon-based material, and, more specifically, it may be a lithium metal, considering the characteristics of high-capacitance batteries.

The non-aqueous electrolyte may function as a medium through which ions involved in an electrochemical reaction of the lithium-air battery may travel. In addition, the non-aqueous electrolyte may be an organic solvent that does not contain water, and such a non-aqueous organic solvent may be a carbonate-based, ester-based, ether-based, ketone-based, or organosulfur-based solvent, an organophosphorus-based solvent, or an aprotic solvent.

The non-aqueous organic solvent may contain a lithium salt, and the lithium salt may be dissolved in the organic solvent to function as a source of lithium ions in the battery, and, for example, may serve to facilitate the transfer of lithium ions between the negative electrode and the lithium-ion-conductive solid electrolyte membrane.

The lithium salt may be one, or two or more selected from the group consisting of LiPF₆, LiBF₄, LiSbF₆, LiAsF₆, LiN(SO₂C₂F₅)₂, Li(CF₃SO₂)₂N, LiC₄F₉SO₃, LiClO₄, LiAlO₂, LiAlCl₄, LiN(CₓF₂ₓ₊₁SO₂)(C_{y}F_{2y+1}SO₂) (here, x and y are natural numbers), LiF, LiBr, LiCl, Lil, and lithium bis(oxalato)borate (LiB(C₂O₄)₂; LiBOB). The concentration of the lithium salt may be in the range of 0.1 to 2.0 M. When the concentration of the lithium salt is within the aforementioned range, the electrolyte can exhibit excellent electrolytic performance and the lithium ions can migrate effectively, because the electrolyte has a suitable conductivity and viscosity. Besides the lithium salt, the non-aqueous organic solvent may further contain another metallic salt, examples of which include AlCl₃, MgCl₂, NaCl, KCl, NaBr, KBr, and CaCl₂.

### [Advantageous Effects]

The positive electrode for a lithium-air battery of the present invention can improve the energy efficiency and capacitance by realizing a high charge/discharge capacitance by using mesoporous carbon as a redox catalyst of oxygen.

### [Description of Drawings]

FIG. 1 is a schematic diagram of an air battery.
FIG. 2 is a result of measuring the pore size distribution of the mesoporous carbon prepared according to one example of the present invention.
FIGS. 3 to 6 is a result of measuring the charge/discharge characteristic of lithium-air batteries including the mesoporous carbon prepared according to one example of the present invention and a comparative example.

### [Modes of the Invention]

Hereinafter, the present invention will be described in further detail with reference to examples. However, the present invention is not limited by the following examples.

### <Preparation Examples> Preparation of mesoporous carbon

### <Preparation Example 1> Preparation of 1.7 nm mesoporous carbon

48 g F127 was added to a solution containing 30 g of a 0.2 M hydrochloric acid solution and 120 g ethanol to be mixed together at 40 °C for 1 hour. 32.2 g tetraethylene orthosilicate was added to 51.53 g ethanol to be mixed together at 40 °C for 1 hour. The two solutions were combined, mixed at 40 °C for 5 hours, dried at 40 °C for 8 hours, and then dried at 100 °C for 24 hours.

After drying, the resulting product was heat-treated for 2 hours under a 600 °C argon (Ar) atmosphere, dipped in a 50 wt % hydrofluoric acid solution for 24 hours, and washed several times with water and ethanol to prepare 1.7 nm mesoporous carbon.

### <Preparation Example 2> Preparation of 2.8 nm mesoporous carbon

2.8 nm mesoporous carbon was prepared in the same manner as the above, except that 64.4 g tetraethylene orthosilicate was put in the mixture.

### <Preparation Example 3> Preparation of 6.0 nm mesoporous carbon

2.6 g F127 was added to a solution containing 1.63 g of a 0.2 M hydrochloric acid solution and 13 g ethanol to be mixed together at 40 °C for 1 hour. 3.4 g tetraethylene orthosilicate and 8.1 g resol were added to 32.4 g ethanol to be mixed together at 40 °C for 1 hour. The two solutions were combined, mixed at 40 °C for 2 hours, dried at 40 °C for 8 hours, and then dried at 100 °C for 24 hours.

After drying, the resulting product was heat-treated for 2 hours under a 600 °C Ar atmosphere, dipped in a 50 wt % hydrofluoric acid solution for 24 hours, and washed several times with water and ethanol to prepare 6.0 nm mesoporous carbon.

### <Preparation Example 4> Preparation of 17 nm mesoporous carbon

0.4 g of a polyethylene oxide-polystyrene block copolymer (PEO-b-PS, Mn = 30200 g/mol, polydispersity=1.34) was dissolved in 10 ml of a tetrahydrofuran solution. Then, 0.19 g of a 0.2 M hydrofluoric acid solution was added thereto.

32.2 g tetraethylene orthosilicate was added to 51.53 g ethanol to be mixed together at 40 °C for 1 hour. The two solutions were combined, mixed at 40 °C for 5 hours, dried at 40 °C for 8 hours, and then dried at 100 °C for 24 hours.

After drying, the resulting product was heat-treated for 2 hours under a 600 °C Ar atmosphere, dipped in a 50 wt % hydrofluoric acid solution for 24 hours, and washed several times with water and ethanol to prepare 17 nm mesoporous carbon.

### <Test Example> Determination of pore size distribution of mesoporous carbon

The pore size distribution of the mesoporous carbon prepared according to the Preparation Examples 1 to 4 was measured, and the results are shown in FIG. 2.

### <Example 1>

The mesoporous carbon with the 1.7 nm mesopore diameter prepared according to the above preparation example 1, a polyvinylidene fluoride (PVDF), and carbon black (super P) were mixed in a 70:20:10 weight ratio and were dispersed in N-methyl-2-pyrrolidone to prepare a composition for a positive electrode active material layer. The composition for a positive electrode active material layer was coated on a carbon paper (TGP-H-030, Toray Industries, Inc.) collector and then dried to fabricate a positive electrode. Lithium metal foil was used as a negative electrode.

Using the fabricated positive electrode, the negative electrode and a porous glass filter (Whatman™), a coin-cell-type lithium-air battery was fabricated. In this case, the positive electrode was fabricated to have pores for easy permeation of oxygen. A liquid electrolyte containing LiCF₃SO₃ dissolved at 1 M concentration in a solvent of tetraethylene glycol dimethyl ether was injected between the positive electrode and the negative electrode to fabricate a lithium-air battery.

### <Example 2>

A lithium-air battery was fabricated in the same manner as in Example 1, except that the positive electrode was fabricated by mixing the mesoporous carbon with the 2.8 nm mesopore diameter prepared according to the above preparation example 2, PVDF, and carbon black (super P) in a 70:20:10 weight ratio.

### <Example 3>

A lithium-air battery was fabricated in the same manner as in Example 1, except that the positive electrode was fabricated by mixing the mesoporous carbon with the 6.0 nm mesopore diameter prepared according to the above preparation example 3, PVDF, and carbon black (super P) in a 70:20:10 weight ratio.

### <Comparative Example>

A lithium-air battery was fabricated in the same manner as in Example 1, except that the positive electrode was fabricated by mixing the mesoporous carbon with the 17 nm mesopore diameter, PVDF, and carbon black (super P) in a 70:20:10 weight ratio.

### <Test Example 1: Assessment of electrochemical performance of lithium-air batteries>

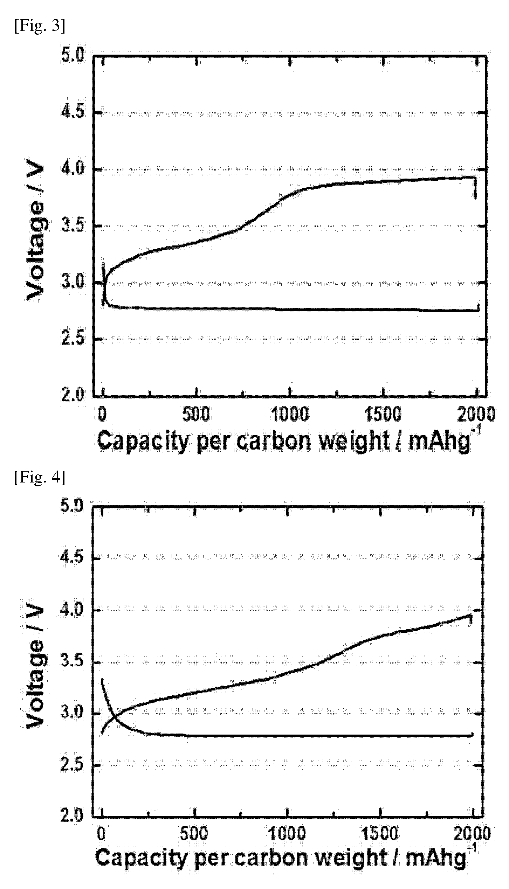

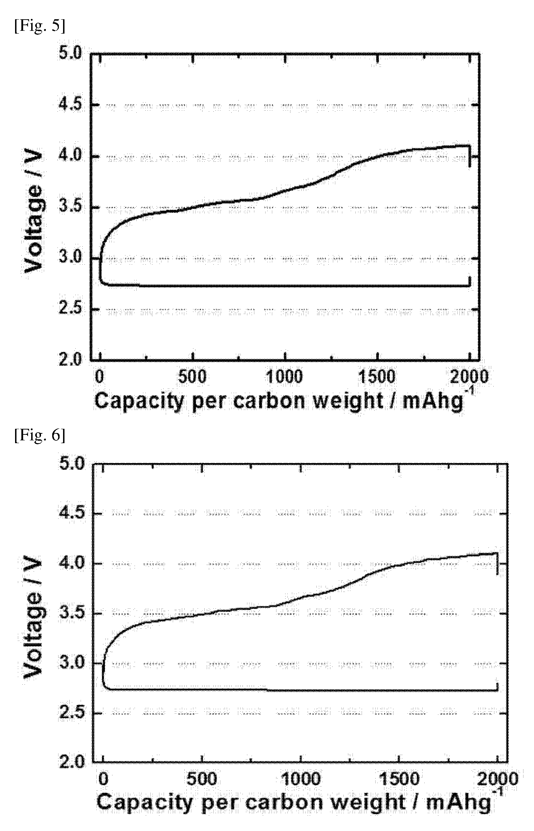

To assess the electrochemical performance of the lithium-air batteries, the lithium-air batteries fabricated according to Examples 1 to 3 and Comparative Example were put in a chamber filled with oxygen, were discharged and charged once for 10 hours under current conditions of 2.0 to 4.5 V and 200 mA/g, and the results are shown in FIGS. 3 to 6, respectively.

As appears in FIGS. 3 to 6, in the case of Example 1, in which mesoporous carbon with the mesopore diameter of 1.7 nm was used, and Example 2, in which mesoporous carbon with the mesopore diameter of 2.8 was used, excellent charge/discharge characteristics due to an increase in energy efficiency with decreasing charging potential were observed, in comparison to the Comparative Example, in which mesoporous carbon with the pore diameter of 5 nm or more (i.e. 17 nm) was used.

### [Industrial Applicability]

The positive electrode for a lithium-air battery of the present invention can improve energy efficiency and capacitance by realizing a high charge/discharge capacitance by using mesoporous carbon as a redox catalyst of oxygen.

## Claims

1. A positive electrode for a lithium-air battery using oxygen as a positive electrode active material, and comprising mesoporous carbon as a reduction/oxidation (redox) catalyst of the oxygen.

2. The positive electrode of claim 1, wherein the mesoporous carbon has an average pore size of 1 to 5 nm, as measured by a Brunauer-Emmett-Teller (BET) method.

3. The positive electrode of claim 1, wherein the mesoporous carbon has an average diameter of 100 nm to 100 µm.

4. The positive electrode of claim 1, wherein the mesoporous carbon has a specific surface area of 10 m²/g or more, as measured by a BET method.

5. The positive electrode of claim 1, further comprising:
one or more oxygen reduction/oxidation (redox) catalysts selected from the group consisting of a metal particle, a metal oxide particle, and an organometallic compound.

6. The positive electrode of claim 5, wherein the metal particle is selected from the group consisting of Pt, Pd, Ru, Rh, Ir, Ag, Au, Ti, V, Cr, Mn, Fe, Ni, Co, Cu, Mo, W, Zr, Zn, Ce, La, and alloys thereof.

7. The positive electrode of claim 5, wherein the metal oxide particle is one or more selected from the group consisting of manganese oxides, cobalt oxides, iron oxides, zinc oxides, nickel oxides, vanadium oxides, molybdenum oxides, niobium oxides, titanium oxides, tungsten oxides, chromium oxides, and complex oxides thereof.

8. The positive electrode of claim 1, wherein the positive electrode comprises a catalyst at 0.1 to 80 % by weight of a total weight of the positive electrode.

9. The positive electrode of claim 1, wherein the positive electrode further comprises a binder.

10. The positive electrode of claim 1, wherein the positive electrode further comprises a carbon-based material.

11. The positive electrode of claim 9 or claim 10, wherein the positive electrode comprises a catalyst at 0.1 to 77.1 % by weight, a carbon-based material at 0 to 97 % by weight, and a binder at 2.9 to 20 % by weight of a total weight of the positive electrode.

12. A lithium-air battery comprising:
the positive electrode of claim 1;
a negative electrode that is capable of occluding or releasing lithium ions; and
a non-aqueous electrolyte.
